# EUROPÄISCHE PATENTSCHRIFT

(11) **EP 2 655 943 B1**
(45) Veröffentlichungstag und Bekanntmachung des Hinweises auf die Patenterteilung: **15.02.2017**
(21) Anmeldenummer: 11805393.3
(22) Anmeldetag: 19.12.2011
(51) Int. Cl.: F16K 1/42, F24D 19/10, G05D 23/02

(54) **VENTIL, INSBESONDERE HEIZKÖRPERVENTIL**
VALVE, IN PARTICULAR FOR A HEATER
VANNE, EN PARTICULIER POUR UN CORPS DE CHAUFFAGE

(30) Priorität: 22.12.2010 DE 102010055483
(43) Veröffentlichungstag der Anmeldung: 30.10.2013
(73) Patentinhaber: Danfoss A/S, 6430 Nordborg (DK)
(72) Erfinder: ATZEN, Bent, DK-8700 Horsens (DK); GARM, Fester, DK-8600 Silkeborg (DK); HÖLCK, Poul, DK-8300 Odder (DK); KRISTIANSEN, Erik, Lund, DK-8680 Ry (DK); MARKVART, Arne, DK-8600 Silkeborg (DK); SCHÜTT, Franz, Søndergaard, DK-8600 Silkeborg (DK)
(74) Vertreter: Knoblauch, Andreas
(86) Internationale Anmeldenummer: PCT/DK2011/000151
(87) Internationale Veröffentlichungsnummer: WO 2012/095107

(56) Entgegenhaltungen:
- EP-A1- 0 014 838
- EP-A2- 1 217 270
- WO-A1-98/55785
- FR-A1- 2 565 219
- GB-A- 1 334 118

## Beschreibung

Die Erfindung betrifft ein Ventil, insbesondere ein Heizkörperventil mit einem Gehäuse, einem Einlass, einem ersten Auslass, mindestens einem zweiten Auslass, einer Ventilsitzanordnung, die für jeden Auslass einen Ventilsitz aufweist, und einem Ventilelement, das mit der Ventilsitzanordnung zusammenwirkt, entlang einer Betätigungsachse bewegbar ist und im geschlossenen Zustand mit dem dem ersten Auslass zugeordneten Ventilsitz und dem dem mindestens einem zweiten Auslass zugeordneten Ventilsitz jeweils eine Schließlinie bildet, wobei die mindestens zwei Schließlinien an einem gemeinsamen Ventilelement angeordnet sind und die Schließlinien entlang der Betätigungsachse um einen vorbestimmten Abstand relativ zueinander versetzt sind.

Ein derartiges Ventil ist beispielsweise aus FR 2 565 219 bekannt. Das dortige Ventil umfasst einen Balg aus flexiblem Material. Der Balg ist dabei an einem gleitend im Ventil bewegbaren Steuerorgan befestigt. Durch ein Verschieben des Steuerorgans werden Teile des Balgs elastisch verformt, wodurch Kanäle im Ventil geöffnet oder verschlossen werden.

Ein weiteres Ventil ist aus GB 1 334 118 bekannt. Das Ventil umfasst eine Basis sowie ein Gehäuse. Innerhalb des Gehäuses sind eine Vielzahl an Platten sowie mindestens eine Membran angeordnet. Die Membran wirkt dabei als Ventilelement, das auf relative Druckunterschiede in zwischen den Platten angeordneten Kammern reagiert. Durch eine Verformung der Membran kann dabei jeweils ein Fluidweg verschlossen sowie ein anderer Fluidweg geöffnet werden.

Ein weiteres Heizkörperventil ist beispielsweise aus DE 196 43 902 A1 bekannt.

Ein Einsatzgebiet eines derartigen Heizkörperventils findet sich beispielsweise bei Plattenheizkörpern mit mindestens zwei Platten. Ein derartiger Plattenheizkörper muss auf eine bestimmte maximale Heizleistung ausgelegt sein, die im so genannten "Volllastbetrieb" erreicht wird. In diesem Volllastbetrieb werden die beiden Platten von einem Wärmeträgermedium, beispielsweise heißem Wasser, durchströmt. Der Heizkörper heizt einen Raum dann einerseits mit Strahlungswärme, die hauptsächlich von der dem Raum zugewandten Platte abgestrahlt wird, und andererseits durch Konvektion, bei der beide Platten Luft erwärmen, die sich dann im Raum verteilt.

Wenn die volle Heizleistung nicht gefordert wird, dann drosselt das Heizkörperventil den Strom des Wärmeträgerfluids durch den Heizkörper. In diesem so genannten "Teillastbetrieb" kann die Drosselung so stark sein, dass die dem Raum zugewandte Platte des Plattenheizkörpers nicht wesentlich wärmer als die Raumtemperatur ist. Eine derartige Platte wird dann von einem Benutzer oft als kalt empfunden, was das Komfortgefühl beeinträchtigt.

Man hat daher in der oben genannten DE 196 43 902 A1 ein Heizkörperventil vorgeschlagen, das in der Lage ist, im Teillastbetrieb das Wärmeträgermedium ausschließlich durch eine Platte des Heizkörpers zu leiten, insbesondere durch die dem Raum zugewandte Platte. Erst wenn eine größere Heizleistung erforderlich wird, wird auch die zweite Platte mit Wärmeträgermedium versorgt.

Das bekannte Ventil weist zwei Ventilelemente auf. Jedes Ventilelement liegt an einem Ventilsitz an. Wenn eine Heizleistung gefordert wird, hebt zunächst ein Ventilelement von seinem Ventilsitz ab. Nach einer gewissen Hubhöhe kommt dieses Ventilelement zur Anlage an das zweite Ventilelement und nimmt es bei der weiteren Bewegung mit, so dass auch das zweite Ventilelement von seinem Ventilsitz abhebt.

Eine ähnliche Ausgestaltung ist aus DE 10 2005 037 769 A1 bekannt. Hier ist ein erstes Ventilelement innerhalb eines zweiten Ventilelements angeordnet, das einen Ventilsitz für das zweite Ventilelement bildet. Wenn das erste Ventilelement von seinem Ventilsitz abgehoben hat, strömt Wärmeträgermedium zunächst durch die Öffnung zwischen dem ersten Ventilelement und dem zugehörigen Ventilsitz in einen ersten Auslass. Bei einer weiteren Bewegung des ersten Ventilelements nimmt das erste Ventilelement das zweite Ventilelement mit, das dadurch von seinem Ventilsitz abhebt und einen Strömungsweg von einem Einlass zu einem zweiten Auslass freigibt.

In beiden Fällen benötigt man zwei Ventilelemente, die relativ zueinander beweglich sein müssen, was wiederum eine gegenseitige Abdichtung erfordert. Dies macht den Aufbau derartiger Heizkörperventile kompliziert.

Der Erfindung liegt die Aufgabe zugrunde, ein Heizkörperventil mit mehreren Auslässen einfach aufzubauen.

Diese Aufgabe wird bei einem Heizkörperventil der eingangs genannten Art dadurch gelöst, dass das Ventilelement oder die Ventilsitzanordnung zumindest im Bereich seiner Schließlinie um den Abstand verformbar ist, wobei das Ventil derart ausgestaltet ist, dass in einer vollständig geöffneten Position der Ventils ein Strom von Wärmeträgermedium vom Einlass sowohl zum ersten Auslass als auch zum mindestens einen zweiten Auslass möglich ist.

Mit einem derartigen Aufbau lässt sich das Heizkörperventil relativ einfach gestalten. Die nachfolgende Erläuterung befasst sich mit einem Heizkörperventil, das zwei Auslässe aufweist und dementsprechend zwei Ventilsitze mit zwei Schließlinien. Es ist aber ohne Weiteres nachzuvollziehen, dass eine entsprechende Ausbildung auch mit mehr als zwei Auslässen realisierbar wäre.
Die beiden Schließlinien sind parallel zur Betätigungsachse relativ zueinander versetzt. Gleichzeitig ist das Ventilelement soweit verformbar, dass es diesen Abstand in Richtung der Betätigungsachse ausgleichen kann. In einer Schließstellung liegt das Ventilelement dann an beiden Ventilsitzen an und versperrt den Durchgang vom Einlass zu beiden Auslässen. Wenn das Ventilelement nun um eine Strecke bewegt wird, die kleiner ist als der vorbestimmte Abstand, dann bleibt das Ventilelement in Anlage an einem Ventilsitz, hebt jedoch vom anderen Ventilsitz ab. Dementsprechend wird ein Strömungspfad vom Einlass zu einem Auslass geöffnet und das Wärmeträgermedium kann durch den Auslass abfließen. Erst wenn das Ventilelement noch weiter bewegt worden ist und zwar um eine Strecke, die größer ist als der vorbestimmte Abstand, hebt es vom zweiten Ventilsitz ab und erlaubt eine Strömung des Wärmeträgermediums in den zweiten Auslass, dem der zweite Ventilsitz zugeordnet wird. Ein derartiges Heizkörperventil ist vielfach durch einen Thermostatventilaufsatz gesteuert, der in diesem Fall genauso einfach ausgebildet sein kann, wie bei einem Heizkörperventil mit nur einem Auslass. Auch dort erfolgt die Steuerung des Wärmeträgermediums ausschließlich über den Hub des Ventilelements gegenüber dem Ventilsitz. Diese Steuerungsart kann beibehalten werden. Der Hub übernimmt hier zusätzlich eine zweite Funktion, nämlich die Freigabe des zweiten Ventilsitzes, wenn eine größere Menge an Wärmeträgermedium benötigt wird und diese dann in den zweiten Auslass gelangen soll.

Vorzugsweise weist das Ventilelement zumindest im Bereich einer Schließlinie ein elastomeres Element mit einer ausreichenden Verformbarkeit auf. Das elastomere Element kann dann im Bereich eines Ventilsitzes zusammengedrückt werden, so dass das Ventilelement im Übrigen am zweiten Ventilsitz zur Anlage kommen kann. Die Verwendung eines elastomeren Elements ist eine relativ einfache Möglichkeit, die Verformbarkeit des Ventilelements sicherzustellen.

Bevorzugterweise bildet das elastomere Element die mindestens zwei Schließlinien. Man benötigt also nur ein einziges elastomeres Element, das dann an beiden Ventilsitzen anliegen kann. Dies vereinfacht den Aufbau des Heizkörperventils weiter.

Vorzugsweise weist das Ventilelement für jede der mindestens zwei Schließlinien eine Dichtlippe auf. Eine Dichtlippe lässt sich mit relativ geringen Kräften verformen, dichtet aber andererseits mit einer ausreichenden Zuverlässigkeit am Ventilsitz ab, so dass der Strom des Wärmeträgermediums mit ausreichender Zuverlässigkeit gesteuert werden kann.

Bevorzugterweise ist mindestens eine Dichtlippe an einem sich quer zur Betätigungsachse erstreckenden Steg angeordnet, der parallel zur Betätigungsachse verformbar ist. Mit dem Steg erhält man auf einfache Weise eine Möglichkeit, einen relativ langen "Federweg" zu realisieren, über den die an dem Steg angeordnete Dichtlippe bewegt werden kann. Der Steg übernimmt dann den größten Teil der Verformung.

Bevorzugterweise sind die dem ersten Auslass und dem mindestens einen zweiten Auslass zugeordneten Ventilsitze konzentrisch zueinander angeordnet. Dies erleichtert den Zustrom des Wärmeträgermediums durch den Einlass zu dem Ventilelement. Man kann auf einfache Weise sicherstellen, dass das Ventilelement immer durch den Ventilsitz bzw. durch die Ventilsitze hindurch angeströmt wird.

Bevorzugterweise ist zwischen einem Auslass und dem diesem Auslass zugeordneten Ventilsitz ein im Ventilgehäuse angeordneter Kanal vorgesehen. Das Ventilgehäuse wird also verwendet, um die beiden Auslässe voneinander zu trennen. Weitere Abdichtungen sind hier nicht erforderlich.

In einer alternativen Ausgestaltung ist vorgesehen, dass zwischen einem Auslass und dem diesem Auslass zugeordneten Ventilsitz ein im Ventilelement angeordneter Strömungspfad vorgesehen ist. In diesem Fall bildet das Ventilelement die Trennung zwischen den beiden Auslässen. Solange das Ventilelement an einem Ventilsitz anliegt, ist ein Strom von Wärmeträgermedien nur zu einem Auslass möglich, nämlich zu dem Auslass, dessen Ventilsitz freigegeben worden ist. Wenn der andere Ventilsitz freigegeben wird, dann kann das Wärmeträgermedium am Ventilelement vorbei in den anderen Auslass strömen.

Hierbei ist vorgesehen, dass das Ventilelement mit einer Kurzschlussverhinderungseinrichtung versehen ist, die den ersten Auslass von mindestens einem zweiten Auslass trennt. Wenn der Strömungspfad zum ersten Auslass durch das Ventilelement verläuft, besteht das Risiko, dass das Wärmeträgermedium um das Ventilelement herumströmt und damit zum zweiten Auslass gelangt. Dies wird durch die Kurzschlussverhinderungseinrichtung auf einfache Weise, aber zuverlässig so weit unterbunden, dass es nicht stört. Im Idealfall wird ein Strom von Wärmeträgermedium vom ersten Auslass zu dem mindestens einen zweiten Auslass vollständig verhindert.

Hierbei ist bevorzugt, dass die Kurzschlussverhinderungseinrichtung eine am Ventilelement angeordnete Gleitdichtung aufweist, die an einer das Ventilelement umgebenden Ringwand anliegt. Wenn das Ventilelement bewegt wird, dann gleitet die Gleitdichtung an der Ringwand entlang und bildet somit in jeder Position eine Sperre zwischen den beiden Auslässen, so dass das Wärmeträgermedium tatsächlich nur zu dem Auslass geführt werden kann, zu dem es auch strömen soll.

In einer alternativen Ausgestaltung kann vorgesehen sein, dass die Kurzschlussverhinderungseinrichtung eine am Ventilelement angeordnete Kontaktdichtung aufweist, die an einem Gegenelement anliegt und nach einem vorbestimmten Bewegungshub des Ventilelements vom Gegenelement abhebt. Diese Ausgestaltung hat den Vorteil, dass das Ventilelement bei einer Bewegung keine Reibungskräfte der Gleitdichtung überwinden muss. Man muss lediglich dafür sorgen, dass die Kontaktdichtung über einen gewissen Hub des Ventilelements, der etwa dem Abstand der Ventilsitze parallel zur Bewegungsachse entspricht, noch am Gegenelement anliegen bleibt, um einen Kurzschluss zwischen den beiden Auslässen zu verhindern.

Dies lässt sich beispielsweise dadurch realisieren, dass die Kontaktdichtung federnd mit dem Ventilelement verbunden ist. Hierzu kann die Kontaktdichtung beispielsweise durch ein elastomeres Bauelement gebildet sein, das einen radial vorstehenden Flansch aufweist, der in sich in gewissem Umfang verformbar ist. Man kann natürlich die Kontaktdichtung auch an einer ringförmig ausgebildeten Federscheibe aufhängen.

Die Kurzschlussverhinderungseinrichtung kann auch ein Voreinstellelement aufweisen, das gegenüber dem Gehäuse und dem Ventilelement abdichtet. Die Abdichtung kann auch dadurch erfolgen, dass das Voreinstellelement gegenüber der Spindel abdichtet, die das Ventilelement trägt. Das Voreinstellelement ist im Gehäuse drehbar angeordnet, um eine Voreinstellung des Stromes des Wärmeträgermediums zu bewirken. Ein derartiges Voreinstellelement lässt sich relativ leicht gegenüber dem Gehäuse abdichten. Es ist beispielsweise axial gegenüber dem Gehäuse unbeweglich. Eine Abdichtung gegenüber dem Ventilelement oder der das Ventilelement tragenden Spindel ist ebenfalls leicht möglich.

Vorzugsweise wirkt das Voreinstellelement auf den ersten Auslass und den mindestens einen zweiten Auslass gemeinsam. Man hat damit die Möglichkeit, mit einer einzigen Betätigung des Voreinstellelements den Strom des Wärmeträgermediums durch zwei Auslässe gleichzeitig zu beeinflussen.

Hierbei ist bevorzugt, dass das Voreinstellelement mit unterschiedlichen Durchtrittseigenschaften auf verschiedene Auslässe wirkt. Man kann dann den Strom des Wärmeträgermediums durch die einzelnen Auslässe unterschiedlich gestalten und voreinstellen, gleichwohl aber eine gemeinsame Einstellung bewirken.

Die Erfindung wird im Folgenden anhand von bevorzugten Ausführungsbeispielen in Verbindung mit einer Zeichnung beschrieben. Hierin zeigen:
- Fig. 1: eine erste Ausführungsform eines Heizkörperventils,
- Fig. 2: eine zweite Ausführungsform eines Heizkörperventils,
- Fig. 3: eine dritte Ausführungsform eines Heizkörperventils,
- Fig. 4: eine vierte Ausführungsform eines Heizkörperventils,
- Fig. 5: eine fünfte Ausführungsform eines Heizkörperventils,
- Fig. 6: eine sechste Ausführungsform eines Heizkörperventils und
- Fig. 7: eine siebte Ausführungsform eines Heizkörperventils.

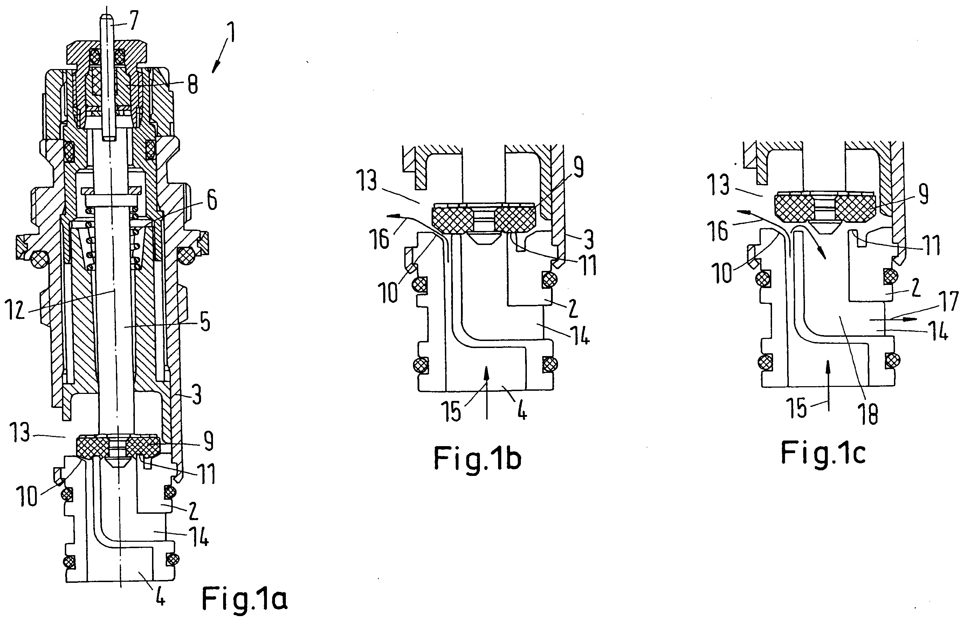

Fig. 1a zeigt ein Heizkörperventil 1 mit einem Ventilgehäuse, das ein Unterteil 2 und ein Oberteil 3 aufweist. Das Unterteil 2 und das Oberteil 3 sind miteinander verbunden. Am Unterteil 2 ist ein Einlass 4 vorgesehen.

Im Oberteil 3 ist eine Ventilspindel 5 vorgesehen, die durch eine Feder 6 in Öffnungsrichtung beaufschlagt ist. Die Ventilspindel 5 ist durch einen Stößel 7 betätigbar, der durch eine Stopfbuchse 8 geführt ist. Der Stößel 7 kann beispielsweise durch einen Thermostatventilaufsatz betätigt werden.

An dem Ende der Ventilspindel 5, das dem Unterteil 2 zugewandt ist, ist ein Ventilelement 9 angeordnet, das durch einen elastomeren, also verformbaren Körper gebildet ist.
Am Unterteil 2 sind ein erster Ventilsitz 10 und ein zweiter Ventilsitz 11 ausgebildet. Die beiden Ventilsitze 10, 11 sind parallel zu einer Betätigungsachse 12 relativ zueinander versetzt, d.h. sie weisen in eine Richtung parallel zur Betätigungsachse 12 einen vorbestimmten Abstand auf. Dieser Abstand kann relativ klein sein. Er beträgt beispielsweise nur rund 1 mm oder sogar weniger.

Der erste Ventilsitz 10 ist einem ersten Auslass 13 zugeordnet, der im Oberteil 3 des Gehäuses ausgebildet ist. Der zweite Ventilsitz 11 ist einem zweiten Auslass 14 zugeordnet, der im Unterteil 2 ausgebildet ist.

Da die beiden Ventilsitze 10, 11 parallel zur Betätigungsachse 12 relativ zueinander versetzt sind, wird das Ventilelement 9 verformt, wenn es an beiden Ventilsitzen 10, 11 zur Anlage gebracht wird. Die Verformung muss dabei so groß sein, dass sie den Abstand der beiden Ventilsitze 10, 11 parallel zur Betätigungsachse 12 überwindet, so dass das verformte Ventilelement 9 an beiden Ventilsitzen 10, 11 anliegt, wie in Fig. 1a dargestellt. In diesem Fall bildet das Ventilelement 9 mit den beiden Ventilsitzen 10, 11 zwei Schließlinien und zwar eine Schließlinie zwischen dem Ventilelement 9 und dem ersten Ventilsitz 10 und eine Schließlinie zwischen dem Ventilelement 9 und dem zweiten Ventilsitz 11. Wenn das Heizkörperventil, wie in Fig. 1 a dargestellt, vollständig geschlossen ist, ist jeglicher Strom eines Wärmeträgermediums vom Einlass 4 zu den beiden Auslässen 13, 14 unterbunden.

Wenn das Ventilelement 9, wie in Fig. 1b dargestellt, geringfügig bewegt wird und zwar um weniger als den vorbestimmten Abstand, dann hebt das Ventilelement 9 vom ersten Ventilsitz 10 ab und erlaubt einen Strom von Wärmeträgermedium vom Einlass 4 zum ersten Auslass 13, wie dies durch Pfeile 15, 16 dargestellt ist. Im Übrigen dichtet das Ventilelement 9 aber noch am zweiten Ventilsitz 11 ab, so dass kein Wärmeträgermedium vom Einlass 4 in den zweiten Auslass 14 gelangen kann.

Erst wenn das Ventilelement 9, wie in Fig. 1c dargestellt ist, noch weiter vom Unterteil 2 abgehoben worden ist, hebt es auch vom zweiten Ventilsitz 11 ab, so dass Wärmeträgermedium auch in den zweiten Auslass 14 gelangt, wie dies durch einen Pfeil 17 dargestellt ist. Ein Kanal 18, der zum zweiten Auslass 14 führt, ist dabei im Unterteil 2 des Gehäuses angeordnet. Das Unterteil 2 des Gehäuses trennt daher die beiden Auslässe 13, 14 voneinander.

Der erste Auslass 13 kann beispielsweise mit einer dem Raum zugewandten Platte eines Plattenheizkörpers verbunden sein, während der zweite Auslass 14 mit einer dahinter angeordneten Platte des Plattenheizkörpers verbunden ist. Wenn also das Ventilelement 9 im Teillastbetrieb um eine Strecke weg vom Unterteil 2 bewegt wird, die kleiner als der Abstand ist, dann wird nur die vordere, also dem Raum zugewandte Platte des Plattenheizkörpers mit Wärmeträgermedium versorgt. Ein Zufluss von Wärmeträgermedium zur hinteren Platte unterbleibt. Dieser wird erst freigegeben, wenn das Ventilelement 9 noch weiter vom Unterteil 2 des Gehäuses abgehoben worden ist, wie in Fig. 1c dargestellt ist.

Die beiden Ventilsitze 10, 11 sind konzentrisch zueinander angeordnet. Hierbei ist der radial äußere erste Ventilsitz 10 "tiefer" angeordnet als der zweite Ventilsitz 11, d.h. er ist in einer Richtung vom Oberteil 3 zum Unterteil 2 weiter weg vom Stößel 7 als der zweite Ventilsitz 11.

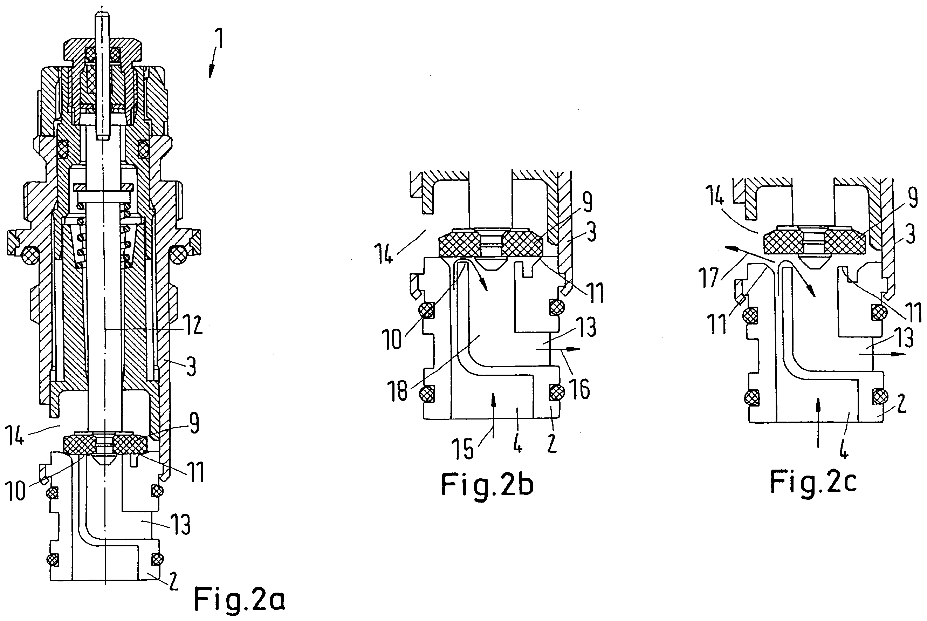

Fig. 2 zeigt eine zweite Ausführungsform eines Heizkörperventils 1, bei der gleiche Elemente mit den gleichen Bezugszeichen versehen sind.

Der einzige Unterschied zwischen den Ausführungsformen nach den Figuren 1 und 2 besteht darin, dass der erste Ventilsitz 10 nun radial innen angeordnet ist und der zweite Ventilsitz 11 radial außen. Nach wie vor sind aber die beiden Ventilsitze 10, 11 in eine Richtung parallel zur Betätigungsachse 12 um den vorbestimmten Abstand relativ zueinander versetzt. Wenn also das Ventilelement 9, wie in Fig. 2b dargestellt ist, vom Unterteil 2 abgehoben wird, dann gibt es zuerst den ersten Ventilsitz 10 frei, so dass Wärmeträgermedium in den ersten Auslass 13 gelangen kann, wie dies durch Pfeile 15, 16 dargestellt ist. Das Ventilelement 9 bleibt aber am zweiten Ventilsitz 11, so dass ein Durchfluss vom Einlass 4 zum zweiten Auslass 14 nicht möglich ist.

Dieser Durchfluss wird erst möglich, wenn das Ventilelement 9 noch weiter vom Unterteil 2 abgehoben worden ist, so dass es auch vom zweiten Ventilsitz 11 abhebt (Fig. 2c). In diesem Fall wird ein Durchgang auch zum zweiten Auslass 14 freigegeben, was durch einen Pfeil 17 dargestellt ist.

Auch bei der Ausgestaltung nach Fig. 2 trennt das Unterteil 2 den Einlass 13 und den Auslass 14 voneinander. In diesem Fall ist der Kanal 18 zwischen dem ersten Ventilsitz 10 und dem Auslass 13 vorgesehen.

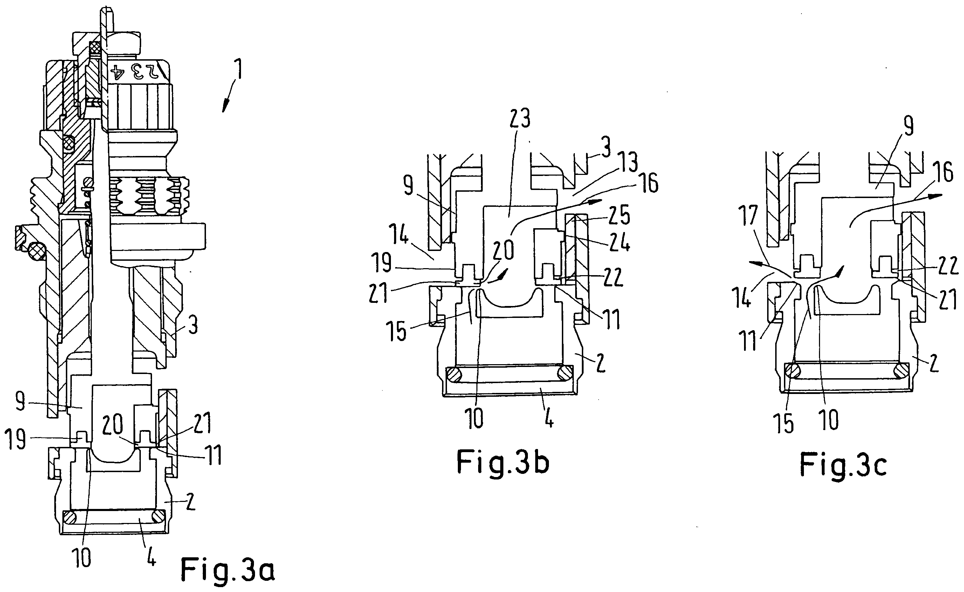

Fig. 3 zeigt eine dritte Ausgestaltung eines Heizkörperventils 1, bei der gleiche Elemente mit den gleichen Bezugszeichen versehen sind.

In diesem Fall ist das Ventilelement 9 auf seiner dem Unterteil 2 zugewandten Seite mit einem Dichtungselement 19 versehen, das im Querschnitt T-förmig ausgebildet ist. Das "T" steht bei der Darstellung der Fig. 3 allerdings auf dem Kopf.

Das Dichtungselement 19 weist einen radial inneren umlaufenden Flansch 20 auf, der am ersten Ventilsitz 10 anliegt und einen radial äußeren umlaufenden Flansch 21, der am zweiten Ventilsitz 11 anliegt. Zumindest der radial äußere Flansch 21 ist in gewissem Umfang verformbar. Im gering belasteten oder unbelasteten Zustand ist daher zwischen dem Ventilelement 9 und dem radial äußeren Flansch 21 ein Zwischenraum 22 vorhanden, der die Verformung des radial äußeren Flansches 21 aufnehmen kann, wenn das Ventilelement 9 soweit an das Unterteil 2 angenähert wird, dass das Dichtungselement 9 mit beiden Flanschen 20, 21 an den beiden Ventilsitzen 10, 11 anliegt. Dieser Zustand ist in Fig. 3a dargestellt. Das Heizkörperventil 1 ist geschlossen.

Wenn das Ventilelement 9 um eine Strecke weg vom Unterteil 2 bewegt wird, die kleiner als der vorbestimmte Abstand ist, dann hebt der radial innere Flansch 20 vom ersten Ventilsitz 10 ab und gibt einen Durchgang vom Einlass 4 zum ersten Auslass 13 frei. Dies ist durch Pfeile 15, 16 in Fig. 3b dargestellt. Dabei strömt das Wärmeträgermedium durch einen Strömungspfad 23, der im Inneren des Ventilelements 9 ausgebildet ist.

Das Ventilelement 9 liegt allerdings noch mit dem radial äußeren Flansch 21 des Dichtungselements 19 am zweiten Ventilsitz 11 an, so dass ein Durchtritt von Wärmeträgermedium vom Einlass 4 zum zweiten Auslass 14 nicht möglich ist.

Das Ventilelement 9 weist eine Gleitdichtung 24 auf, die an einer Ringwand 25 im Oberteil 3 des Gehäuses anliegt. Die Gleitdichtung 24 bildet zusammen mit der Ringwand 25 eine Kurzschlussverhinderungseinrichtung, die in jeder Stellung des Ventilelements 9 relativ zum Unterteil 2 bewirkt, dass praktisch kein Wärmeträgermedium vom ersten Auslass 13 zum zweiten Auslass 14 gelangt.

Dies ist erst dann möglich, wenn das Ventilelement 9 weiter vom Unterteil 2 abgehoben worden ist, so dass das Dichtungselement 19 mit seinen beiden Flanschen 20, 21 von beiden Ventilsitzen 10, 11 frei gekommen ist, so dass auch ein Strom von Wärmeträgermedium zum zweiten Auslass 14 möglich ist, wie dies durch den Pfeil 17 dargestellt ist (Fig. 3c).

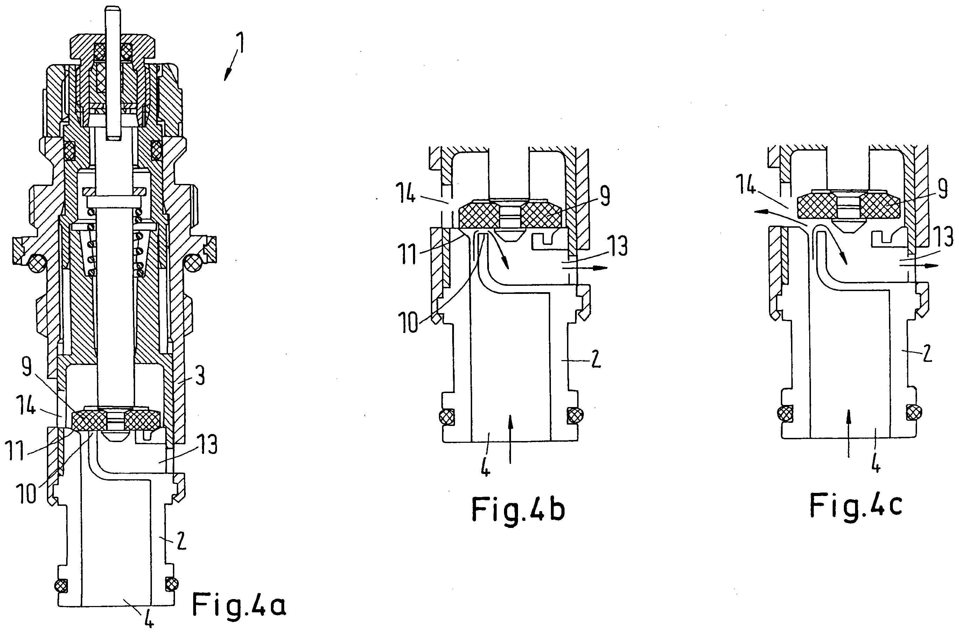

Fig. 4 zeigt eine vierte Ausgestaltungsform eines Heizkörperventils 1. Gleiche und einander entsprechende Elemente sind mit den gleichen Bezugszeichen versehen.

In diesem Fall ist nicht nur das Ventilelement 9 aus einem elastomeren Material gebildet, sondern auch der zweite Ventilsitz 11 weist eine gewisse Nachgiebigkeit auf. Es ist auch möglich, dass nur der zweite Ventilsitz 11 eine Nachgiebigkeit aufweist, das Ventilelement 9 aber nicht verformt wird.

Diese Ausgestaltung führt zum gleichen Ergebnis wie die Ausgestaltung nach Fig. 2. Wenn das Ventilelement 9 vom Unterteil 2 weg bewegt wird, dann hebt es vom ersten Ventilsitz 10 ab und gibt einen Durchgang vom Einlass 4 zum ersten Auslass 13 frei. Der zweite Ventilsitz 11 hat sich zwar bereits wieder etwas zurückverformt. Gleichwohl ist ein dichtender Kontakt zwischen dem Ventilelement 9 und dem ersten Ventilsitz 11 nach wie vor vorhanden, so dass ein Strom von Wärmeträgermedium vom Einlass 4 zum zweiten Auslass 14 unterbunden wird. Dieser Strom wird erst freigegeben, wenn das Ventilelement noch weiter vom Unterteil 2 entfernt worden ist (wie dies in Fig. 4c dargestellt ist).

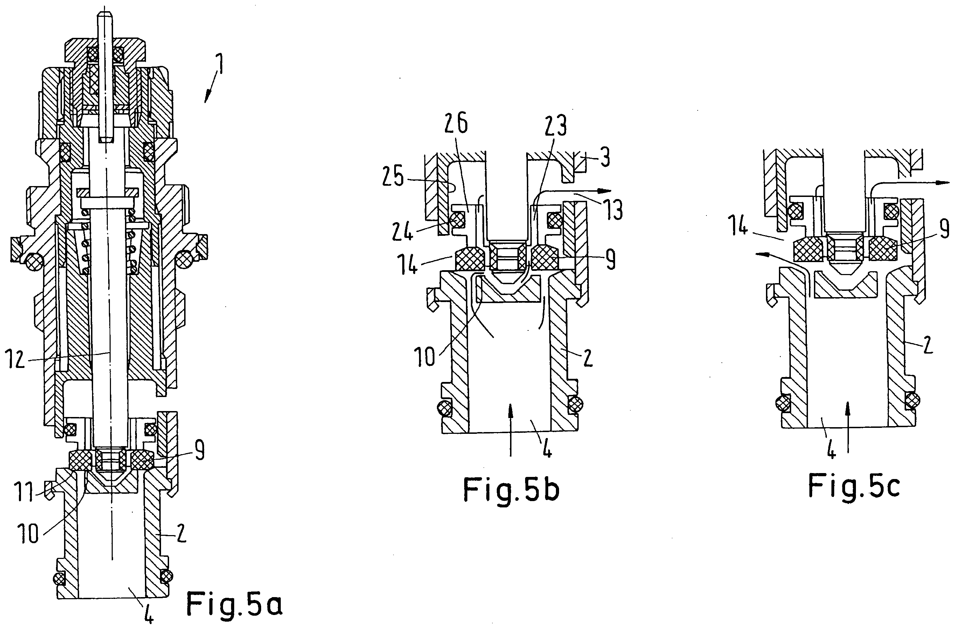

Fig. 5 zeigt eine fünfte Ausgestaltung eines Heizkörperventils 1, bei der gleiche und vergleichbare Elemente mit den gleichen Bezugszeichen versehen worden sind.

In diesem Fall ist das Ventilelement 9 wieder vollständig als elastomerer Körper ausgebildet, der dann, wenn das Heizkörperventil 1 vollständig geschlossen ist, sowohl am ersten Ventilsitz 10 als auch am zweiten Ventilsitz 11 anliegt. Die beiden Ventilsitze 10, 11 sind wiederum parallel zur Betätigungsachse 12 relativ zueinander versetzt. Wenn das Ventilelement 9 vom Unterteil 2 weg bewegt wird, dann kommt es zunächst vom ersten Ventilsitz 10 frei und gibt einen Strömungspfad vom Einlass 4 zum Auslass 13 frei. Dieser Strömungspfad umfasst auch den Strömungspfad 23 im Ventilelement 9.

Das Ventilelement 9 ist mit einem Aufsatz 26 versehen, der die Gleitdichtung 24 aufnimmt, die an der Ringwand 25 anliegt und eine Kurzschlussverhinderungseinrichtung bildet, die einen Kurzschluss zwischen dem ersten Auslass 13 und dem zweiten Auslass 14 verhindert.

Erst dann, wenn das Ventilelement 9 noch weiter vom Unterteil 2 entfernt worden ist, wird ein Durchlass vom Einlass 4 auch zum zweiten Auslass 14 freigegeben.

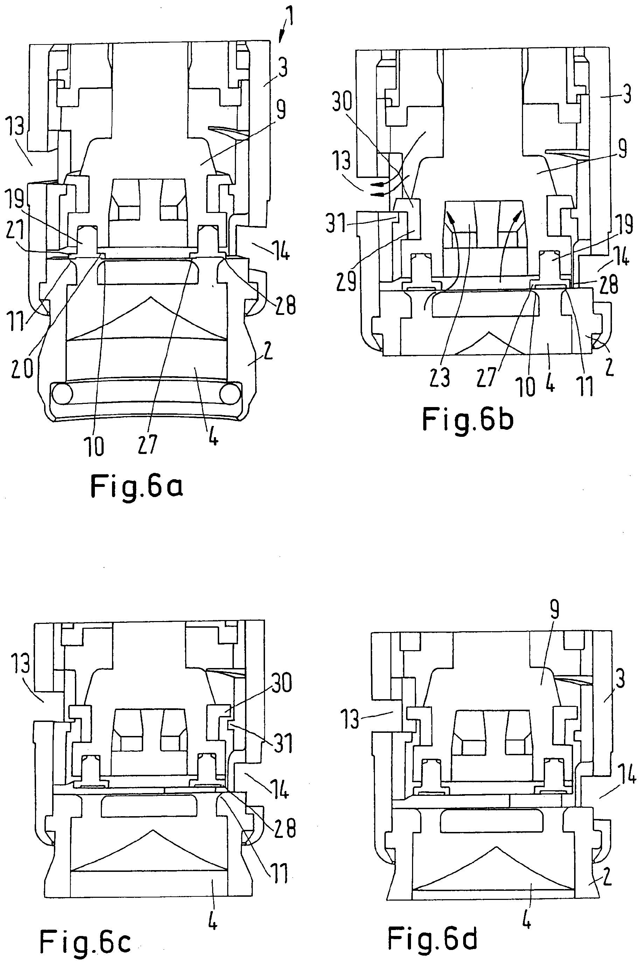

Fig. 6 zeigt eine sechste Ausgestaltung eines Heizkörperventils (im Ausschnitt), bei der gleiche und einander entsprechende Elemente mit den gleichen Bezugszeichen versehen sind.

Das Ventilelement 9 ist wiederum mit einem Dichtungselement 19 versehen, das zwei radial vorstehende Flansche aufweist, nämlich einen radial nach innen vorstehenden Flansch 20, der mit dem ersten Ventilsitz 10 zusammenwirkt, und einen radial nach außen vorstehenden Flansch 21, der mit dem zweiten Ventilsitz 11 zusammenwirkt. Beide Flansche sind mit Dichtlippen 27, 28 versehen, die an den Ventilsitzen 10, 11 anliegen. Die Flansche 20, 21, insbesondere der Flansch 21, bilden eine nachgiebige Abstützung für die Dichtlippen 27, 28, so dass diese mit einer ausreichenden Kraft an den Ventilsitzen 10, 11 anliegen können.

Wenn das Ventilelement 9 etwas vom Unterteil entfernt worden ist, dann hebt die Dichtlippe 27 vom ersten Ventilsitz 10 ab und Wärmeträgermedium kann durch den Zwischenraum zwischen dem ersten Ventilsitz 10 und der radial inneren Dichtlippe 27 am Dichtelement 19 des Ventilelements 9 in den Strömungspfad 23 im Inneren des Ventilelements 9 strömen und von dort zum ersten Auslass 13. Da die radial äußere Dichtlippe 28 aber noch am zweiten Ventilsitz 11 anliegt, ist ein Durchgang zum zweiten Auslass 14 unterbrochen.

Am Ventilelement 9 ist weiterhin ein im Querschnitt L-förmiger elastomerer Ring 29 angeordnet, der mit einem radial nach außen ragenden umlaufenden Flansch 30 an einem Gegenelement 31 am Oberteil 3 des Gehäuses anliegt. Der Flansch 30 bildet eine Kontaktdichtung, die federnd mit dem Ventilelement 9 verbunden ist. Diese federnde Verbindung ermöglicht es, dass der Flansch 30 auch dann noch am Gegenelement 31 anliegt, wenn ein Durchgang zwischen dem ersten Ventilsitz 10 und dem Dichtungselement 19 freigegeben worden ist, der Durchgang zwischen dem zweiten Ventilsitz 11 und dem Dichtungselement 19 hingegen noch verschlossen ist. Der Flansch 30 bildet zusammen mit dem Gegenelement 31 also wiederum eine Kurzschlussverhinderungseinrichtung, die einen Übertritt von Wärmeträgemedium vom ersten Auslass 13 zum zweiten Auslass 14 verhindert.

In Fig. 6c ist eine Situation dargestellt, in der ein Durchgang zwischen dem zweiten Ventilsitz 11 und der radial äußeren Dichtlippe 28 gerade frei gegeben worden ist. Dementsprechend besteht eine Verbindung zwischen dem Einlass 4 und dem zweiten Auslass 14. Gleichzeitig hat der Flansch 30 vom Gegenelement 31 abgehoben, weil es in dieser Situation nicht mehr erforderlich ist, dass ein Kurzschluss zwischen dem ersten Auslass 13 und dem zweiten Auslass 14 verhindert wird.

Fig. 6d zeigt das Heizkörperventil 1 vollständig geöffnet, d.h. das Ventilelement 9 hat die größtmögliche Entfernung vom Unterteil 2 eingenommen. Ein Strom von Wärmeträgermedium vom Einlass 4 ist sowohl zum ersten Auslass 13 als auch zum zweiten Auslass 14 möglich.

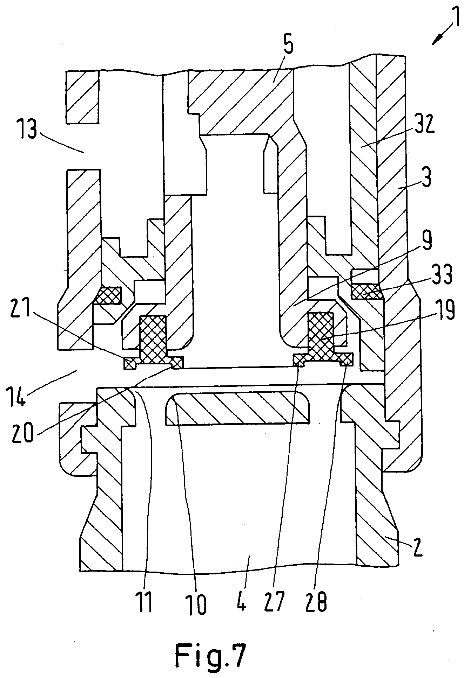

Fig. 7 zeigt eine siebte Ausführungsform eines Heizkörperventils, das in wesentlichen Teilen der Ausführungsform nach Fig. 6 entspricht. Gleiche Elemente sind daher mit den gleichen Bezugszeichen wie in Fig. 6 versehen.

Ein Voreinstellelement 32 dichtet gegenüber dem Gehäuse radial nach außen ab. Hierzu ist eine Dichtung 33 zwischen dem Voreinstellelement 32 und dem Oberteil 3 des Gehäuses vorgesehen. Das Voreinstellelement 32 umschließt die Spindel 5 radial innen dicht, so dass praktisch kein Wärmeträgermedium durch einen Spalt zwischen dem Voreinstellelement 32 und der Ventilspindel 5 fließen kann.

Das Voreinstellelement 32 wirkt auf beide Auslässe 13, 14 gleichzeitig, d.h. wenn das Voreinstellelement 32 im Oberteil 3 verdreht wird, dann drosselt es die beiden Auslässe 13, 14 gleichzeitig oder gibt sie entsprechend mehr oder weniger frei.

In nicht näher dargestellter Weise kann allerdings vorgesehen sein, dass das Voreinstellelement 32 verschiedene Spuren, Kanten, Nuten oder dergleichen aufweist, die für die beiden Auslässe 13, 14 unterschiedlich sind. Dementsprechend kann man mit einer einzigen Betätigungsvoreinstellung 32 zwar beide Auslässe 13, 14 voreinstellen, die Voreinstellcharakteristiken für beide Auslässe 13, 14 aber dennoch unterschiedlich gestalten.

Ein Voreinstellelement 32 kann auch bei den ersten sechs Ausführungsformen des Ventils verwendet werden. Das Voreinstellelement 32 muss dann dort nicht als Bestandteil einer Kurzschlussverhinderungseinrichtung angesehen werden. Auch bei den übrigen Ausführungsformen kann man dann vorsehen, dass mit einem einzigen Voreinstellungselement 32 die Voreinstellung von zwei oder mehr Auslässen 13, 14 gleichzeitig erfolgt, wobei für die unterschiedlichen Auslässe auch unterschiedliche Kanten, Nuten, Durchlässe oder dergleichen vorgesehen sein können.

## Patentansprüche

1. Ventil, insbesondere Heizkörperventil (1) mit einem Gehäuse (2, 3), einem Einlass (4), einem ersten Auslass (13), mindestens einem zweiten Auslass (14), einer Ventilsitzanordnung (10, 11), die für jeden Auslass (13, 14) einen Ventilsitz (10, 11) aufweist, und einem Ventilelement (9), das mit der Ventilsitzanordnung (10, 11) zusammenwirkt, entlang einer Betätigungsachse (12) bewegbar ist und im geschlossenen Zustand mit dem dem ersten Auslass (13) zugeordneten Ventilsitz (10) und dem dem mindestens einen zweiten Auslass (14) zugeordneten Ventilsitz (11) jeweils eine Schließlinie bildet, wobei die mindestens zwei Schließlinien an einem gemeinsamen Ventilelement (9) angeordnet sind und die Schließlinien entlang der Betätigungsachse (12) um einen vorbestimmten Abstand relativ zueinander versetzt sind, **dadurch gekennzeichnet, dass** das Ventilelement (9) oder die Ventilsitzanordnung (10, 11) zumindest im Bereich einer Schließlinie um den Abstand verformbar ist, wobei das Ventil derart ausgestaltet ist, dass in einer vollständig geöffneten Position des Ventils (1) ein Strom von Wärmeträgermedium vom Einlass (4) sowohl zum ersten Auslass (13) als auch zum mindestens einen zweiten Auslass (14) möglich ist.

2. Ventil nach Anspruch 1, **dadurch gekennzeichnet, dass** das Ventilelement (9) zumindest im Bereich einer Schließlinie ein elastomeres Element mit einer ausreichenden Verformbarkeit aufweist.

3. Ventil nach Anspruch 2, **dadurch gekennzeichnet, dass** das elastomere Element die mindestens zwei Schließlinien bildet.

4. Ventil nach einem der Ansprüche 1 bis 3, **dadurch gekennzeichnet, dass** das Ventilelement (9) für jede der mindestens zwei Schließlinien eine Dichtlippe (27, 28) aufweist.

5. Ventil nach Anspruch 4, **dadurch gekennzeichnet, dass** mindestens eine Dichtlippe (28) an einem sich quer zur Betätigungsachse erstreckenden Steg (21) angeordnet ist, der parallel zur Betätigungsachse (12) verformbar ist.

6. Ventil nach einem der Ansprüche 1 bis 5, **dadurch gekennzeichnet, dass** die dem ersten Auslass (13) und dem mindestens einen zweiten Auslass (14) zugeordneten Ventilsitze (10, 11) konzentrisch zueinander angeordnet sind.

7. Ventil nach einem der Ansprüche 1 bis 6, **dadurch gekennzeichnet, dass** zwischen einem Auslass und dem diesem Auslass zugeordneten Ventilsitz ein im Ventilgehäuse (2, 3) angeordneter Kanal (18) vorgesehen ist.

8. Ventil nach einem der Ansprüche 1 bis 6, **dadurch gekennzeichnet, dass** zwischen einem Auslass und dem diesem Auslass zugeordneten Ventilsitz ein im Ventilelement (9) angeordneter Strömungspfad (23) vorgesehen ist.

9. Ventil nach Anspruch 8, **dadurch gekennzeichnet, dass** das Ventilelement (9) mit einer Kurzschlussverhinderungseinrichtung versehen ist, die den ersten Auslass (13) von mindestens einem zweiten Auslass (14) trennt.

10. Ventil nach Anspruch 9, **dadurch gekennzeichnet, dass** die Kurzschlussverhinderungseinrichtung eine am Ventilelement (9) angeordnete Gleitdichtung (24) aufweist, die an einer das Ventilelement (9) umgebenden Ringwand (25) anliegt.

11. Ventil nach Anspruch 9, **dadurch gekennzeichnet, dass** die Kurzschlussverhinderungseinrichtung eine am Ventilelement (9) angeordnete Kontaktdichtung (30) aufweist, die an einem Gegenelement (31) anliegt und nach einem vorbestimmten Bewegungshub des Ventilelements (9) vom Gegenelement (30) abhebt.

12. Ventil nach Anspruch 11, **dadurch gekennzeichnet, dass** die Kontaktdichtung (30) federnd mit dem Ventilelement (9) verbunden ist.

13. Ventil nach einem der Ansprüche 9 bis 12, **dadurch gekennzeichnet, dass** die Kurzschlussverhinderungseinrichtung ein Voreinstellelement (32) aufweist, das gegenüber dem Gehäuse (2, 3) und dem Ventilelement (9) abdichtet.

14. Ventil nach Anspruch 13, **dadurch gekennzeichnet, dass** das Voreinstellelement (32) auf den ersten Auslass (13) und den mindestens einen zweiten Auslass (14) gemeinsam wirkt.

15. Ventil nach Anspruch 14, **dadurch gekennzeichnet, dass** das Voreinstellelement (32) mit unterschiedlichen Durchlasseigenschaften auf verschiedene Auslässe (13, 14) wirkt.

## Claims

1. Valve, in particular radiator valve (1), having a housing (2, 3), having an inlet (4), having a first outlet (13), having at least one second outlet (14), having a valve seat arrangement (10, 11) which has one valve seat (10, 11) for each outlet (13, 14), and having a valve element (9) which interacts with the valve seat arrangement (10, 11) and which is movable along an actuation axis (12) and which, in the closed state, forms in each case one closing line with the valve seat (10) assigned to the first outlet (13) and with the valve seat (11) assigned to the at least one second outlet (14), wherein the at least two closing lines are arranged on a common valve element (9), and the closing lines are offset relative to one another with a predetermined spacing along the actuation axis (12), **characterized in that** the valve element (9) or the valve seat arrangement (10, 11) is deformable by the spacing at least in the region of one closing line, wherein the valve is designed such that, in a fully opened position of the valve (1), a flow of heat carrier medium is possible from the inlet (4) both to the first outlet (13) and to the at least one second outlet (14).

2. Valve according to Claim 1, **characterized in that** the valve element (9) has, at least in the region of one closing line, and elastomer element with sufficient deformability.

3. Valve according to Claim 2, **characterized in that** the elastomer element forms the at least two closing lines.

4. Valve according to one of Claims 1 to 3, **characterized in that** the valve element (9) has one sealing lip (27, 28) for each of the at least two closing lines.

5. Valve according to Claim 4, **characterized in that** at least one sealing lip (28) is arranged on a web (21) which extends transversely with respect to the actuation axis and which is deformable parallel to the actuation axis (12).

6. Valve according to one of Claims 1 to 5, **characterized in that** the valve seats (10, 11) assigned to the first outlet (13) and to the at least one second outlet (14) are arranged concentrically with respect to one another.

7. Valve according to one of Claims 1 to 6, **characterized in that**, between an outlet and the valve seat assigned to said outlet, there is provided a duct (18) which is arranged in the valve housing (2, 3).

8. Valve according to one of Claims 1 to 6, **characterized in that**, between an outlet and the valve seat assigned to said outlet, there is provided a flow path (23) which is arranged in the valve element (9).

9. Valve according to Claim 8, **characterized in that** the valve element (9) is equipped with a bypass prevention device which separates the first outlet (13) from at least one second outlet (14).

10. Valve according to Claim 9, **characterized in that** the bypass prevention device has a slide seal (24) which is arranged on the valve element (9) and which bears against a ring-shaped wall (25) surrounding the valve element (9).

11. Valve according to Claim 9, **characterized in that** the bypass prevention device has a contact seal (30) which is arranged on the valve element (9) and which bears against a counterpart element (31) and, after a predetermined movement stroke of the valve element (9), lifts off from the counterpart element (30).

12. Valve according to Claim 11, **characterized in that** the contact seal (30) is resiliently connected to the valve element (9).

13. Valve according to one of Claims 9 to 12, **characterized in that** the bypass prevention device has a presetting element (32) which seals against the housing (2, 3) and against the valve element (9).

14. Valve according to Claim 13, **characterized in that** the presetting element (32) acts jointly on the first outlet (13) and on the at least one second outlet (14).

15. Valve according to Claim 14, **characterized in that** the presetting element (32) acts with different passage characteristics on different outlets (13, 14).

## Revendications

1. Soupape, en particulier soupape de corps de chauffage (1) avec un corps (2, 3), une entrée (4), une première sortie (13), au moins une deuxième sortie (14), un agencement de sièges de soupape (10, 11), qui présente un siège de soupape (10, 11) pour chaque sortie (13, 14), et un élément de soupape (9), qui coopère avec l'agencement de sièges de soupape (10, 11), qui est mobile le long d'un axe d'actionnement (12) et qui dans l'état fermé forme respectivement une ligne de fermeture avec le siège de soupape (10) associé à la première sortie (13) et avec le siège de soupape (11) associé à ladite au moins une deuxième sortie (14), dans laquelle lesdites au moins deux lignes de fermeture sont disposées sur un élément de soupape commun (9) et les lignes de fermeture sont décalées l'une par rapport à l'autre d'une distance prédéterminée le long de l'axe d'actionnement (12), **caractérisée en ce que** l'élément de soupape (9) ou l'agencement de sièges de soupape (10, 11) est déformable de la distance au moins dans la région d'une ligne de fermeture, dans laquelle la soupape est configurée de telle manière que, dans une position complètement ouverte de la soupape (1), un écoulement de fluide caloporteur soit possible de l'entrée (4) aussi bien vers la première sortie (13) que vers ladite au moins une deuxième sortie (14).

2. Soupape selon la revendication 1, **caractérisée en ce que** l'élément de soupape (9) présente au moins dans la région d'une ligne de fermeture un élément élastomère présentant une déformabilité suffisante.

3. Soupape selon la revendication 2, **caractérisée en ce que** l'élément élastomère forme lesdites au moins deux lignes de fermeture.

4. Soupape selon l'une quelconque des revendications 1 à 3, **caractérisée en ce que** l'élément de soupape (9) présente pour chacune desdites au moins deux lignes de fermeture une lèvre d'étanchéité (27, 28).

5. Soupape selon la revendication 4, **caractérisée en ce qu'**au moins une lèvre d'étanchéité (28) est disposée sur une nervure (21) s'étendant transversalement à l'axe d'actionnement, et est déformable parallèlement à l'axe d'actionnement (12).

6. Soupape selon l'une quelconque des revendications 1 à 5, **caractérisée en ce que** les sièges de soupape (10, 11) associés à la première sortie (13) et à ladite au moins une deuxième sortie (14) sont disposés de façon concentrique l'un par rapport à l'autre.

7. Soupape selon l'une quelconque des revendications 1 à 6, **caractérisée en ce qu'**il est prévu entre une sortie et le siège de soupape associé à cette sortie un canal (18) agencé dans le corps de soupape (2, 3).

8. Soupape selon l'une quelconque des revendications 1 à 6, **caractérisée en ce qu'**il est prévu entre une sortie et le siège de soupape associé à cette sortie un chemin d'écoulement (23) agencé dans l'élément de soupape (9).

9. Soupape selon la revendication 8, **caractérisée en ce que** l'élément de soupape (9) est doté d'un dispositif d'empêchement de court-circuit, qui sépare la première sortie (13) d'au moins une deuxième sortie (14).

10. Soupape selon la revendication 9, **caractérisée en ce que** le dispositif d'empêchement de court-circuit présente un joint glissant (24) agencé sur l'élément de soupape (9), qui s'applique sur un bord annulaire (25) entourant l'élément de soupape (9).

11. Soupape selon la revendication 9, **caractérisée en ce que** le dispositif d'empêchement de court-circuit présente un joint de contact (30) agencé sur l'élément de soupape (9), qui s'applique sur un élément opposé (31) et se soulève de l'élément opposé (30) après une course de levée prédéterminée de l'élément de soupape (9).

12. Soupape selon la revendication 11, **caractérisée en ce que** le joint de contact (30) est relié élastiquement à l'élément de soupape (9).

13. Soupape selon l'une quelconque des revendications 9 à 12, **caractérisée en ce que** le dispositif d'empêchement de court-circuit présente un élément de préréglage (32), qui est étanche par rapport au corps (2, 3) et à l'élément de soupape (9).

14. Soupape selon la revendication 13, **caractérisée en ce que** l'élément de préréglage (32) agit en commun sur la première sortie (13) et ladite au moins une deuxième sortie (14).

15. Soupape selon la revendication 14, **caractérisée en ce que** l'élément de préréglage (32) agit avec des propriétés de passage différentes sur différentes sorties (13, 14).
